# EUROPEAN PATENT APPLICATION

(11) **EP 4 130 668 A1**
(43) Date of publication of application: **08.02.2023**
(21) Application number: 20931648.8
(22) Date of filing: 18.04.2020
(51) Int. Cl.: G01C 21/30

(54) **METHOD FOR DETERMINING LANE LINE RECOGNITION ABNORMAL EVENT, AND LANE LINE RECOGNITION APPARATUS AND SYSTEM**

(71) Applicant: Huawei Technologies Co., Ltd., Shenzhen, Guangdong 518129, (CN)
(72) Inventor: XIE, Yu, Shenzhen, Guangdong 518129 (CN); YU, Jiawei, Shenzhen, Guangdong 518129 (CN); SHE, Xiaoli, Shenzhen, Guangdong 518129 (CN)
(74) Representative: Pfenning, Meinig & Partner mbB
(86) International application number: PCT/CN2020/085470
(87) International publication number: WO 2021/208110

(57) **Abstract**

This application discloses a method for determining a lane line recognition abnormal event, and a lane line recognition apparatus and system. The method includes: determining an updated lane line recognition confidence based on a posteriori lane line recognition result; constructing a lane line true value based on the updated lane line recognition confidence; and determining a lane line recognition abnormal event based on the lane line recognition result and the lane line true value. In this application, a previously obtained lane line recognition confidence is updated based on the posteriori lane line recognition result, thereby improving accuracy and reliability of the lane line recognition confidence. In addition, the lane line true value is constructed by using the updated lane line recognition confidence, and lane line recognition abnormal events can be obtained by using the constructed lane line true value and the lane line recognition confidence. These abnormal events may be used to further train a lane line recognition algorithm, to improve recognition accuracy and precision of the lane line recognition algorithm.

## Description

### TECHNICAL FIELD

This application relates to the self-driving field, and in particular, to a method for determining a lane line recognition abnormal event, and a lane line recognition apparatus and system.

### BACKGROUND

With rapid development of 5G communications and internet of vehicles technologies, self-driving technologies have become a research hotspot. Core technologies in the self-driving field include intelligent environment awareness, automatic navigation and positioning, driving behavior decision-making, intelligent path planning and control, and the like. During self-driving, a vehicle needs to perform detection for a lane line on a road, and then the vehicle performs driving behavior based on a detected lane line and an enabled function. A lane line recognition result is usually obtained by a lane line recognition apparatus disposed on a vehicle side by processing, based on an algorithm, image information obtained by the vehicle during traveling. Currently, the algorithm is usually a neural network-based deep learning solution (for example, but not limited to, a CNN (convolutional neural network)).

Although deep learning currently has made great progress in image recognition and other fields, a current recognition result for lane line recognition is still not 100% reliable, and common problems include missed detection and false detection of a lane line. For a lane line recognition algorithm, training materials are very important. If missed detection and false detection events cannot be obtained, recognition accuracy of the algorithm is hard to improve, because a lane line recognition result needs to be checked to obtain a lane line recognition abnormal event, and the lane line recognition algorithm needs to be optimized based on valid anomaly data (a positive feedback for the algorithm), so as to evaluate whether a new algorithm is better than the original algorithm, and promote an iterative update of the lane line recognition algorithm. Therefore, to check a lane line recognition result, an existing lane line recognition result obtained based on an algorithm definitely needs to be compared with another reference system.

Currently, the most direct method for checking a lane line recognition result is performing checking relying on manual work, but manually checking whether the lane line recognition result is correct is inefficient and very costly. In another solution, a high-precision map is directly downloaded, and a lane line recognition result of a vehicle is compared with lane line information on the high-precision map. However, 1. production costs of the high-precision map are high, thereby resulting in a limited applicability range; 2. an update may be delayed; and 3. in a road section in which a GPS is blocked by a ground object such as a high-rise building, an overpass, or a tunnel, reception of a satellite signal is affected, thereby possibly causing a positioning data drift in a system, or even causing a signal loss. In still another solution, a lane line is recognized by using a laser radar method. However, the laser radar method is limited by a reflectivity of the lane line. If the reflectivity of the lane line in a laser point cloud is comparatively low, generation accuracy of the lane line is affected. If an amount of data of the laser point cloud increases, a lot of storage space is required, and a lot of computing time is consumed, thereby causing high costs of using the laser radar method on a vehicle side.

To sum up, it can be learned that no reliable and cost-effective solution is currently available for checking a lane line recognition result, and therefore accuracy of a lane line recognition algorithm is also hard to improve due to difficulty in obtaining anomaly data.

### SUMMARY

To resolve the foregoing problems, embodiments of this application provide a method for determining a lane line recognition confidence, a lane line recognition apparatus, a lane line recognition system, and a computer-readable storage medium.

According to an aspect, an embodiment of this application provides a method for determining a lane line recognition confidence. The method may specifically include: determining an updated lane line recognition confidence based on a posteriori lane line recognition result; constructing a lane line true value based on the updated lane line recognition confidence; and determining a lane line recognition abnormal event based on the lane line recognition result and the lane line true value, where the posteriori lane line recognition result includes a lane line recognition confidence obtained after a vehicle completes traveling. In this application, a previously obtained lane line recognition confidence is updated based on the posteriori lane line recognition result, thereby improving accuracy and reliability of the lane line recognition confidence. In addition, the lane line true value is constructed by using the updated lane line recognition confidence, and lane line recognition abnormal events can be obtained by using the constructed lane line true value and the lane line recognition confidence. These abnormal events may be used to further train a lane line recognition algorithm, to improve recognition accuracy and precision of the lane line recognition algorithm.

In a possible design, the posteriori lane line recognition result and posteriori inertial navigation data are aligned based on a timestamp. The posteriori inertial navigation data includes inertial navigation data obtained after the vehicle completes traveling. The lane line recognition result and the inertial navigation data are aligned in time, so that spatial locations of the vehicle and lane line recognition results at different time points may be determined based on a time axis. The lane line recognition result includes a vehicle location, a lane line recognition confidence, and a lane line recognition length.

In a possible design, for any timestamp, an updated lane line recognition confidence corresponding to the any timestamp is determined based on at least two lane line recognition confidences in the posteriori lane line recognition result corresponding to the any timestamp. Technical steps may include: for any timestamp, determining a timestamp set corresponding to the any timestamp, where the timestamp set includes one or more timestamps, and a lane line recognition length of the one or more timestamps includes a vehicle location corresponding to the any timestamp; obtaining a lane line recognition confidence corresponding to each timestamp in the timestamp set, and forming a lane line recognition confidence set; and obtaining at least two lane line recognition confidences from the lane line recognition confidence set, and performing summation to obtain the updated lane line recognition confidence corresponding to the any timestamp. Alternatively, in some other cases, a technical step may include: performing summation on all lane line recognition confidences in the lane line recognition confidence set to obtain the updated lane line recognition confidence corresponding to the any timestamp. For any timestamp, an updated lane line recognition confidence at the timestamp is determined by performing summation on lane line recognition confidences of at least two or more timestamps whose lane line recognition ranges include the timestamp, so that a lane line recognition confidence error caused by recognition fluctuation at a single timestamp is suppressed, and for any timestamp, an updated lane line recognition confidence is more accurate and reliable than an original lane line recognition confidence.

In a possible design, the foregoing technical process is extended to a real-time scenario, namely, a scenario in which a vehicle is traveling. In this case, for example, lane line recognition confidences at a plurality of preceding timestamps of a current timestamp (timestamps before the current timestamp in time) whose lane line recognition ranges include the current timestamp may be selected to perform summation to obtain an updated lane line recognition confidence at the current timestamp, so that reliability and accuracy of the lane line recognition confidence can be improved in real time.

In a possible design, the summation includes at least one of direct summation and weighted summation. In the weighted summation, different weights may be assigned to different timestamps, and a timestamp farther away from a segment (a corresponding timestamp) in time has a smaller weight, and a timestamp closer to the segment has a larger weight. The foregoing relationship between a weight and a distance may be represented by using a well-known function such as a linear function or an exponential function. With the weighted summation, an updated lane line recognition confidence can be obtained more accurately.

In a possible design, the constructing a lane line true value based on the obtained updated lane line recognition confidence further includes: determining whether the updated lane line recognition confidence is greater than a first threshold and whether the lane line recognition length is greater than a second threshold, and obtaining a first timestamp set, where a lane line recognition confidence corresponding to each timestamp in the first timestamp set is greater than the first threshold, and a corresponding lane line recognition length is greater than the first threshold; obtaining, for each timestamp in the first timestamp set, a first lane line point set of N to M meters near the vehicle in a vehicle coordinate system; obtaining a second timestamp set whose updated lane line recognition confidence is greater than the first threshold and whose lane line recognition length is less than the second threshold; replacing each timestamp in the second timestamp set with another timestamp that meets a specified condition, where a lane line recognition length corresponding to the another timestamp is greater than the first threshold; for each timestamp in a second timestamp set obtained after the replacement, obtaining a second lane line point set of N to M meters near the vehicle in the vehicle coordinate system; and clustering and grouping the first lane line point set and the second lane line point set, and if a longitudinal distance between lane line point set groups obtained after grouping is greater than a distance threshold, determining, based on a lane line existence determining result, whether to perform collinear connection. With the foregoing process, the lane line true value can be constructed based on the updated (more accurate and reliable) lane line recognition confidence. Therefore, compared with an original lane line recognition result, the lane line true value obtained by using the foregoing technical steps is closer to an actual situation, and is suitable for serving as an object or a reference for comparison with the lane line recognition result.

In a possible design, the obtained lane line true value and the lane line recognition result are compared to determine an abnormal event. The abnormal event includes: The lane line recognition result is excessively short, a lateral error of the lane line recognition result is excessively large, an orientation error of the lane line recognition result is excessively large, or missed detection exists in the lane line recognition result.

In a possible design, after the abnormal event is obtained, the abnormal event may be fed back to a lane line recognition algorithm on a server side (for example, a cloud) as a high-value training material, and recognition accuracy of the lane line recognition algorithm can be improved. After the recognition accuracy of the lane line recognition algorithm is improved, a lane line recognition algorithm on the vehicle side may be updated through communication. In this way, a benign cycle from data to a training material to improvement of algorithm performance can be formed.

In the implementations of the first aspect, an updated lane line recognition confidence determined based on posteriori data is provided. The updated lane line recognition confidence is more reliable than an original lane line recognition confidence, and therefore can serve as a data basis for checking and performing comparison for a lane line recognition result. In the embodiments of the first aspect, no other data source (for example, a laser radar, a GPS, or a high-definition map) needs to be used, and a more reliable lane line recognition result can be obtained only by reprocessing existing lane line recognition data and inertial navigation data that have been obtained by a vehicle, and checking an original lane line recognition result by using the obtained more reliable lane line recognition result. Finally, the solution in the first aspect requires a small amount of computation, has high robustness, and can be easily performed on a vehicle side. To sum up, the implementations of the first aspect provide a cost-effective and highly reliable lane line recognition result optimization solution.

According to a second aspect, an embodiment of this application provides a lane line recognition apparatus, including: a lane line recognition module disposed on a vehicle side; an inertial navigation module disposed on the vehicle side; and a computing apparatus disposed on the vehicle side and communicatively connected to the lane line recognition module and the inertial navigation module, where the computing apparatus is configured to perform the technical solutions in the first aspect. The embodiment of the second aspect provides a lane line recognition apparatus built on the vehicle side. The apparatus may perform the technical solutions in the first aspect and the second aspect on the vehicle side.

According to a third aspect, an embodiment of this application provides a lane line recognition system, including: the lane line recognition apparatus according to the second aspect; and
a lane line recognition algorithm module disposed on a server side (the server side may be a cloud or a server), where the lane line algorithm recognition module includes a lane line recognition algorithm, the lane line recognition apparatus is communicatively connected to the lane line recognition algorithm module, the lane line recognition apparatus is configured to send an abnormal event to the lane line recognition algorithm module, and the lane line recognition algorithm module is configured to train the lane line recognition algorithm by using the abnormal event. The embodiment of the third aspect provides a complete system including a vehicle side and the server side. The system may perform the technical solutions in the first aspect and the second aspect.

According to a fourth aspect, an embodiment of this application provides a computer-readable storage medium, including an instruction set. The instruction set may be executed by a processor to implement the technical solutions in the first aspect.

According to a fifth aspect, an embodiment of this application provides a lane line recognition system, including a processor and a computer-readable storage medium. The computer-readable storage medium stores an instruction set. The instruction set may be executed by the processor to implement the technical solutions in the first aspect.

The embodiments of this application provide a method for determining a lane line recognition confidence, a lane line recognition apparatus, a lane line recognition system, a non-transitory storage medium, and a lane line recognition system. According to the technical solutions of this application, a more reliable updated lane line recognition confidence is obtained based on existing posteriori data, and a lane line true value obtained based on the more reliable updated lane line recognition confidence is used as a reference and compared with a (original) lane line recognition result to obtain a lane line recognition abnormal event. In addition, the lane line recognition abnormal event may be fed back to a lane line recognition algorithm as a high-value training material to train the lane line recognition algorithm, to improve recognition accuracy of the lane line recognition algorithm. The lane line recognition algorithm with improved recognition accuracy may be further sent to a vehicle side, thereby forming a benign cycle. In the technical solutions of this application, no other data source (for example, a laser radar, a GPS, or a high-definition map) needs to be used, and a more reliable lane line recognition result can be obtained only by reprocessing existing lane line recognition data and inertial navigation data that have been obtained by a vehicle. In addition, the technical solutions of this application require a small amount of computation, and checking and abnormal event obtaining can be fully performed on a vehicle side. Therefore, the technical solutions of this application have technical advantages of low costs and high reliability, and have broad application prospects in the self-driving field.

### BRIEF DESCRIPTION OF DRAWINGS

FIG. 1 is a schematic diagram of a method for determining a lane line recognition abnormal event according to an embodiment of this application;
FIG. 2 is a schematic diagram of determining a maximum lane line recognition length and a first time interval in determining a lane line recognition confidence according to an embodiment of this application;
FIG. 3 is a schematic diagram of a process of calculating an updated lane line recognition confidence according to an embodiment of this application;
FIG. 4 is a schematic flowchart of obtaining an updated lane line recognition confidence according to an embodiment of this application;
FIG. 5 is a schematic diagram of constructing a lane line true value according to an embodiment of this application;
FIG. 6 is a schematic diagram of a lane line recognition apparatus and a lane line recognition system according to an embodiment of this application; and
FIG. 7 is a schematic diagram of a computer-readable storage medium and a processor according to an embodiment of this application.

### DESCRIPTION OF EMBODIMENTS

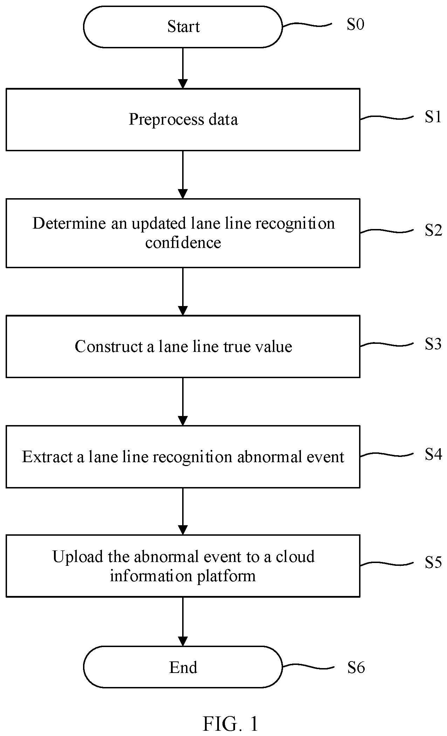

FIG. 1 is an overall flowchart of a method for determining a lane line recognition abnormal event according to an embodiment of this application. The method mainly includes the following steps.
S0: Start.
S1: Preprocess data. In S1, data obtained by a vehicle-mounted module (the obtained data includes a lane line recognition result and inertial navigation data) is preprocessed. The preprocessing operation includes: aligning various data sources based on a timestamp.
S2: Determine an updated lane line recognition confidence. The updated lane line recognition confidence is obtained based on data aligned in S0 and according to specified logic.
S3: Construct a lane line true value. The lane line true value is constructed based on the updated lane line confidence obtained in S2.
S4: Extract a lane line recognition abnormal event. A plurality of types of abnormal lane line recognition results are extracted based on lane line recognition results and the lane line true value obtained in S3.
S5: Upload the abnormal event to a cloud information platform. Anomaly data collected on a vehicle side is uploaded to the cloud information platform, to retrain, verify, and update a lane line recognition algorithm on a cloud.
S6: End.

The foregoing steps are described in detail below with reference to the accompanying drawings.
S0: Start.
S1: Preprocess data

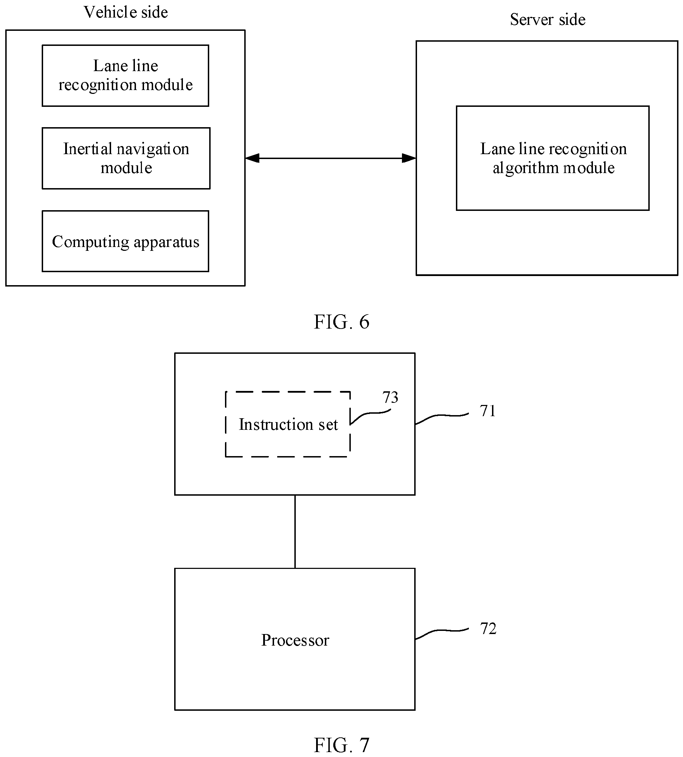

Referring to FIG. 6, lane line recognition result data and inertial navigation data are obtained based on a self-driving system on a vehicle side, and the lane line recognition result and the inertial navigation data are aligned in time. Usually, the lane line recognition result is obtained based on a lane line recognition module on the vehicle side. The lane line recognition module obtains the lane line recognition result by using image information obtained by a vehicle and a related algorithm (for example, but not limited to, an IMM: Interacting Multiple Model). The inertial navigation data is obtained based on an inertial navigation module. Comparatively accurate spatial positioning may be obtained for the vehicle within a short distance range (for example, within 100 meters) based on the inertial navigation data.

In some embodiments, an update frequency of the lane line recognition module is 15 Hz, and an update frequency of the inertial navigation module is 100 Hz. The obtained inertial navigation data is aligned based on the lane line recognition data. An interval between timestamps of aligned lane line recognition result data and that between timestamps of aligned inertial navigation data are both 1/15 = 0.066 seconds. A plurality of timestamps obtained through alignment form a timestamp sequence, and each timestamp in the timestamp sequence represents a specific time point. It can be understood that, although the foregoing frequencies (15 Hz and 100 Hz) are shown in this embodiment and the update frequency of the lane line recognition module is used as an alignment reference, any other suitable frequency and alignment standard may be changed based on an actual scenario. The lane line recognition result and the inertial navigation data are aligned in time, so that spatial locations of the vehicle and lane line recognition results at different time points may be determined based on a time axis.

S2: Determine an updated lane line recognition confidence.

After step S1 is completed, the step of determining an updated lane line recognition confidence may be performed.

In some embodiments, the updated lane line recognition confidence is determined based on posteriori data (namely, data obtained after the vehicle completes traveling). The posteriori data may include the time-aligned lane line recognition result data and inertial navigation data in step S1, and therefore may also be referred to as offline data. In step S2, the lane line recognition confidence may be determined based on the posteriori data.

In some embodiments, an objective of calculating a displacement of the vehicle within a time range of adjacent timestamps based on the inertial navigation data may be achieved by multiplying a vehicle speed at a time point of a timestamp by a time interval between timestamps. The timestamps in the foregoing descriptions are still used as an example. If a vehicle speed at a timestamp T1 (a time point 0) is 80 km/h (that is, V_{T1} is approximately 22 m/s), a displacement of the vehicle between timestamps T1 and T2 may be obtained as follows: V_{T1} × 0.066s = 1.45 m. It should be understood that, although vectors such as a vehicle speed and a vehicle direction at the time point T2 may be different from the vehicle speed and a vehicle direction at the time point T1, because the time interval between adjacent timestamps is 0.066 seconds, and within this time range, for a general vehicle, a change in a vehicle speed or direction that is caused by acceleration, deceleration, or a direction change is small and can be ignored, the foregoing process can be equivalent to a uniform linear motion for calculation. Usually, a vehicle traveling speed does not exceed 120 km/h. Therefore, it may be considered that a maximum displacement S_{MAX} of the vehicle between two timestamps is approximately as follows: 30 m/s × 0.066 ≈ 2 m.

In some embodiments, the lane line recognition result data includes a lane line recognition length X and a lane line recognition confidence C. It should be understood that both the lane line recognition length and the lane line recognition confidence are data corresponding to the timestamp sequence obtained in step S1. To be specific, each timestamp in the timestamp sequence obtained in S1 has a lane line recognition length corresponding to the timestamp and a lane line recognition confidence corresponding to the timestamp.

It should be understood that lane line recognition lengths corresponding to different timestamps may be different. For example, a lane line recognition length at a time point of the timestamp T1 (the time point 0) is 20 meters, and a lane line recognition length at a time point of the timestamp T2 (a time point at the 0.066^{th} second) adjacent to T1 is 35 meters.

The lane line recognition confidence C may be a value ranging from 0 to 1. 0 indicates that the lane line recognition result is completely unreliable, and 1 indicates that the lane line recognition result is completely reliable. Each lane line recognition confidence C has a corresponding confidence interval [N, M], where a value range of N is 4 to 6 meters, and a value range of M is 8 to 12 meters. Usually, for a timestamp, X is greater than M. However, in some special cases, for example, in a scenario in which a lane line is missing or in an intersection scenario, the lane line recognition length X may be alternatively less than M. For a timestamp, the confidence interval [N, M] means that, at a time point of the current timestamp, a recognition range for the vehicle is "reliable" in a range of N to M meters ahead of the vehicle in a traveling direction of the vehicle in a lane in which the vehicle is located (it should be understood that the "reliable" herein means that a lane line recognition confidence result within the confidence interval [N, M] is more accurate and reliable than that in another space interval of the lane line recognition length X, and the "reliable" herein does not mean that a value of a lane line recognition confidence within the confidence interval [N, M] is close to 1 [that is, the lane line recognition result is completely reliable]). In other words, at the time point of the current timestamp, for the obtained lane line recognition range X, a lane line recognition confidence within a range of the confidence interval [N, M] is comparatively reliable.

It should be noted that the confidence interval [N, M] varies with a lane change. To be specific, a value range of a confidence interval of the vehicle for the lane in which the vehicle is located is different from a value range of a confidence interval of the vehicle for an adjacent lane. For example, in some embodiments, for a current lane in which the vehicle is located, a value range of N is 3 to 6 meters, and a value range of M is 8 to 12 meters; and for a lane adjacent to the current lane, a value range of N may be 9 to 11 meters, and a value range of M may be 13 to 17 meters.

In some embodiments, a maximum lane line recognition length L is introduced, where L indicates a specified prior maximum lane line recognition length, that is, a length of a lane line recognized by the vehicle at any time point is not greater than L. L may be a value within a range of 50 to 100 meters. In some embodiments, L may be 70 meters.

According to the foregoing descriptions, it should be understood that each timestamp after the data alignment has a lane line recognition length X and a lane line recognition confidence C that correspond to the timestamp.

It should be further understood that, for each timestamp after the data alignment, the vehicle has a specific and determined vehicle location corresponding to the timestamp in space, and once a coordinate system in which the vehicle is located is determined, the vehicle location may be represented in a form of specific coordinates.

In some embodiments, the offline and posteriori data is processed based on timestamps one by one, to obtain the updated lane line recognition confidence. The following uses a timestamp T as an example to describe in detail specific steps for obtaining the updated lane line recognition confidence.

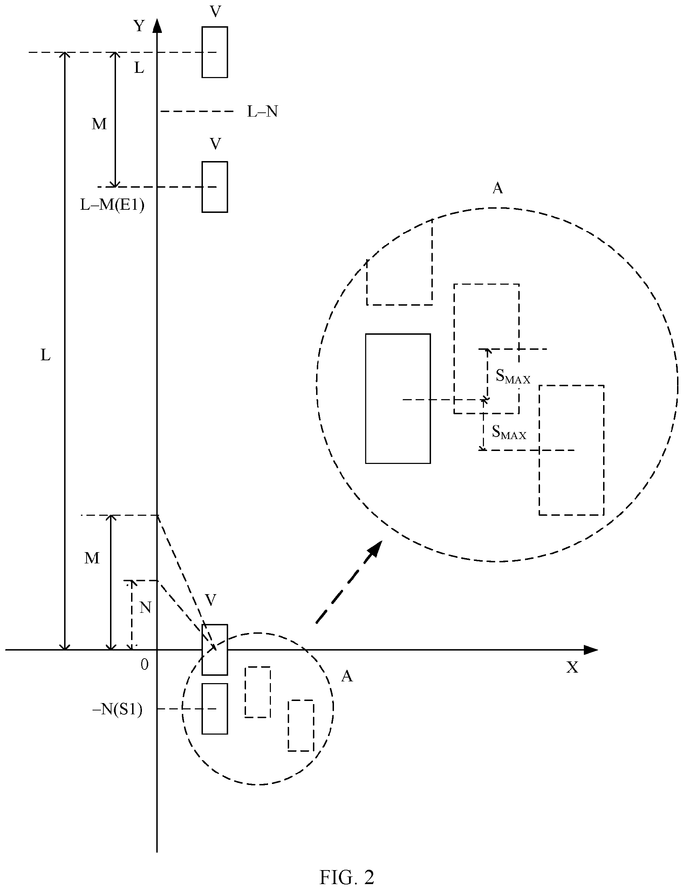

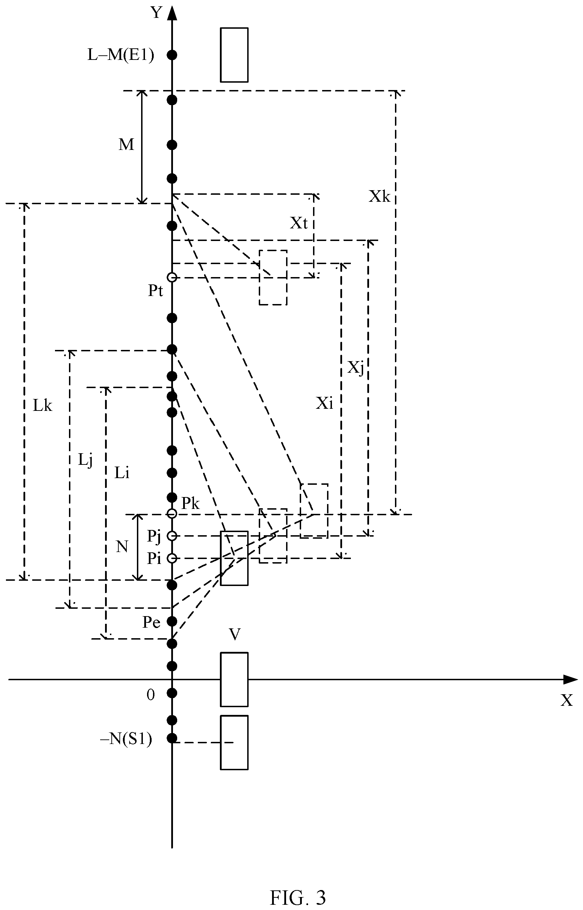

Referring to FIG. 2, at a time point of the timestamp T, first, a location of a vehicle V serves as an origin of a coordinate system, a traveling direction of the vehicle serves as a positive direction of a Y axis, and a direction perpendicular to the traveling direction of the vehicle (namely, a width direction of a road) serves as a positive direction of an X axis. It should be noted that, for clarity of illustration, in FIG. 2, the vehicle V is shown in a positive part of the X axis instead of at a zero point. This is only intended for clarity of illustration, and does not mean that the vehicle V needs to be in the positive part of the X axis. It should be further noted that, in FIG. 3, a geometric center point of the vehicle is selected as a reference point, and any point on the vehicle may be alternatively selected as a reference point, provided that the reference point remains the same in a subsequent process.

FIG. 2 further shows a lane line recognition confidence interval N to M at the time point of the timestamp T. In some embodiments, N may be 4 meters, and M may be 9 meters.

First, a maximum lane line recognition length L at the time point T and a first time interval [S1, E1] corresponding to the maximum lane line recognition length are obtained. A specific process of obtaining the first time interval [S1, E1] includes the following steps.
(1) Obtain, on the Y axis, a range of a length L from a point 0 towards the positive direction, where the range indicates the maximum lane line recognition length L of the vehicle at the time point T. In some embodiments, L may be 70 meters.
(2) Obtain a range of a length from -N to L-M on the Y axis. A reason of obtaining a value in this way lies in that, at the time point T, a lane line in a range of 0 to N on the Y axis is actually toward a "side direction" rather than a "forward direction" with respect to the vehicle. Because an angle of view or a field of view of a vehicle-mounted camera is limited, reliability of the vehicle-mounted camera for recognizing a lane line toward a side direction is not high. This is why the value of N in the lane line recognition confidence interval is not 0. Therefore, to obtain a lane line recognition confidence in the range of 0 to N ahead of the vehicle at the time point T, a vehicle location at N in a negative direction of the Y axis is considered. If the vehicle is in this location, a recognition confidence interval of the vehicle is a range of [0, M-N] in a current coordinate system (a vehicle coordinate system at the time point T). When N and M are 4 and 9 (meters) respectively, the range of [0, M-N] completely covers the range of [0, N]. Therefore, the lane line recognition confidence of the vehicle in the range of 0 to N ahead of the vehicle at the time point T may be "replaced" with a lane line recognition confidence at a timestamp corresponding to the vehicle location at N in the negative direction of the Y axis. Similarly, for a far end (L meters away from the origin), a confidence in a range of L N to L at the time point T may be replaced with a lane line recognition confidence at a timestamp corresponding to a vehicle location that is L-M away from the far end.
(3) In the process of (2), a point that is -N away from the origin and a point that is L-M away from the origin not necessarily "right" have timestamps corresponding to the points. Therefore, a location that is -N±S_{MAX} away from the vehicle and a location that is L-M±S_{MAX} away from the vehicle are considered, where S_{MAX} indicates a maximum displacement of the vehicle between two adjacent timestamps. Referring to an enlarged view of an area A in FIG. 2, because a maximum displacement of the vehicle between two adjacent frames does not exceed S_{MAX}, when a vehicle location (for example, -N) is moved up or down by S_{MAX} (it should be noted that either moving up or moving down is possible), it can be ensured that a timestamp definitely exists between a vehicle location after the moving and the vehicle location at the location of -N. After the timestamp is obtained, the timestamp is denoted as S1. Similarly, a timestamp E1 may be obtained at the far end.
   It should be understood that, in the enlarged view of the area A in FIG. 2, the vehicle is moved in an X direction. This is only intended to clearly show S_{MAX} in the figure, but does not mean that the vehicle actually needs to move in the X direction.
(4) Obtain a first time interval [S1, E1] based on the timestamps S1 and E1. It can be learned that a spatial location interval of the vehicle that corresponds to the first time interval is [-N±S, L-M±S].

After the first time interval [S1, E1] is determined, all timestamps in the first time interval may be obtained, and are denoted as a sequence P: {p₁, p₂, , ...p*ₙ*}. Based on the foregoing descriptions, it should be understood that, for each timestamp Pᵢ (i = 1, 2, 3, ..., n) in the sequence P, a lane line recognition length Xᵢ and a lane line recognition confidence Cᵢ that correspond to the timestamp Pᵢ may be obtained based on posteriori data. A coordinate location of the vehicle at the time point Pᵢ may be further determined. The lane line recognition confidence at the time point Pᵢ is the most reliable at a point within [N, M] ahead of a vehicle location in a traveling direction.

For each timestamp Pᵢ, whether the lane line recognition length Xᵢ at the time point is greater than M is determined. If Xᵢ is greater than M, a second time interval [S2, E2] is obtained based on Xᵢ. According to a principle similar to that of [S1, E1] in steps (2) and (3), it may be determined that a location corresponding to S2 is a location that is N±S below (in the negative direction of the Y axis or an opposite direction of the traveling direction of the vehicle) a current location of the vehicle, and a location corresponding to E2 is a location that is Xᵢ-M±S above (in the positive direction of the Y axis) the current location of the vehicle. A spatial range between the locations corresponding to S2 and E2 is a spatial distance corresponding to the time interval [S2, E2]. After the second time interval [S2, E2] is determined, a timestamp sequence included in/corresponding to a lane line recognition range at the time point of this timestamp (the time point Pᵢ) may be determined and denoted as a sequence Kᵢ: {kᵢ₁, kᵢ₂, , ...k*ᵢₘ*}.

The entire sequence {p₁, p₂, , ...p*ₙ*} is traversed. For each timestamp Pᵢ, a timestamp sequence Kᵢ included in a second time interval corresponding to the timestamp Pᵢ is obtained: {k_{i1,} kᵢ₂, , ...k*ᵢₘ*), where ᵢ∈ (1,n).

For elements in adjacent or spaced P sequences (for example, but not limited to, P₂ and P₄), elements that are in sequences K₂ and K₄ and that correspond to the elements may include overlapping timestamps. To be specific, for one or more timestamps in the sequences K₂ and K₄, the timestamps may appear in the second time series K₂ corresponding to P₂, and may also appear in the second time series K₄ corresponding to P₄.

All second time series (n sequences in total) corresponding to the P sequence are traversed. For any timestamp in a second time series, a quantity of second time series Kᵢ in which the timestamp appears is determined, summation is performed on lane line recognition confidences at timestamps in P sequences that correspond to all second time series in which the timestamp appears, to obtain an updated lane line recognition confidence at the timestamp. For example, if a timestamp appears a total of three times in second time series corresponding to P₁, P₃, and P₄, an updated lane line recognition confidence at the timestamp is a sum of lane line recognition confidences at P₁, P₃, and P₄. It should be understood that the summation herein may be direct summation or weighted summation.

In some embodiments, after the foregoing summation of the lane line recognition confidences is performed, the updated lane line recognition confidence obtained through summation may be further divided by a quantity of lane lines included in the summation, to implement normalization.

It should be noted that, although two time series, namely, the P sequence and the Kᵢ sequence, are described in the foregoing process, both the Kᵢ sequence and the P sequence are constructed based on a same set of timestamp data, namely, timestamp data obtained through data alignment in step S1.

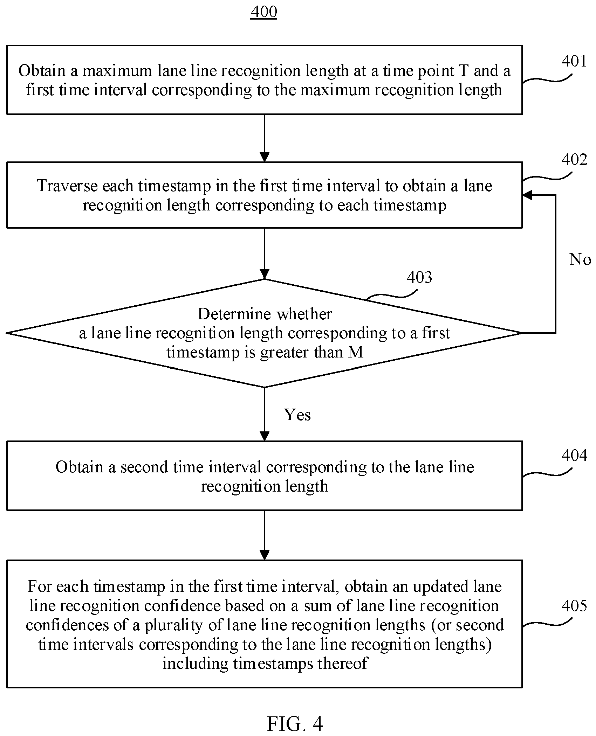

The foregoing process is further understood with reference to FIG. 3. For the timestamp T, after the first time interval [S1, E1] is determined, all timestamps {p₁, p₂, , ...p*ₙ*} in the first time interval may be determined. The timestamps are shown as a plurality of dots on a Y axis in FIG. 4. FIG. 4 shows three adjacent timestamps: Pᵢ, Pⱼ, and Pₖ. The timestamps are represented by hollow dots. Based on each timestamp, the following may be determined:
(1) A location of the vehicle in a Y direction at the time point, namely, a location of a dot on the Y axis at the time point.
(2) A lane line recognition length X at the time point. FIG. 4 shows Xᵢ, Xⱼ, and Xₖ that respectively correspond to Pᵢ, Pⱼ, and Pₖ.
   In the example schematic diagram of FIG. 4, Xᵢ, Xⱼ, and Xₖ are all greater than M. FIG. 4 further shows a timestamp Pₜ, and a lane line recognition length Xₜ corresponding to Pₜ is less than M.
(3) Second time intervals corresponding to Xᵢ, Xⱼ, and Xₖ may be separately obtained based on Xᵢ, Xⱼ, and Xₖ. Distance intervals corresponding to the second time intervals are Lᵢ, Lⱼ, and Lₖ shown in the figure. For example, for Pₖ, after Xₖ corresponding to Pₖ is obtained, Lₖ may be determined by using an interval between a location that is N±S below (in a negative direction of the Y axis or an opposite direction of a traveling direction of the vehicle) a current location of the vehicle and a location that is X-M±S above (in a positive direction of the Y axis) the current location of the vehicle. It should be understood that N±S and Xₖ-M±S are not directly shown in FIG. 4; instead, an interval [-N, Xₖ-M] using the current location of the vehicle as a reference point is shown as an example. After a spatial location Lᵢ is determined, a second time interval corresponding to Xᵢ may be determined based on a correspondence between time and space.
(4) Similar to Xₖ, Lᵢ and Lⱼ may also be obtained for Xᵢ and Xⱼ respectively. In this way, for the three adjacent timestamps Pᵢ, Pⱼ, and Pₖ, second time intervals corresponding to the timestamps may be separately obtained, and then a timestamp included in each second time interval may be determined. It can be learned that the three timestamps Pᵢ, Pⱼ, and Pₖ are included in three intervals Lᵢ, Lⱼ, and Lₖ. Therefore, when an updated lane line recognition confidence at any one of the three timestamps Pᵢ, Pⱼ, and Pₖ is calculated, summation needs to be performed on lane line recognition confidences at the three time points Pᵢ, Pⱼ, and Pₖ. It should be understood that only a case of three timestamps is discussed heretofore, and if a second time interval of another timestamp also includes Pᵢ, Pⱼ, and Pₖ, when lane line recognition confidences at the timestamps are calculated, a lane line recognition confidence at the another timestamp also needs be included in summation. For a timestamp Pₑ, the timestamp Pₑ is included only in the interval Lᵢ, but is not included in the interval Lⱼ or Lₖ. Therefore, when a lane line recognition confidence at the time point Pₑ is calculated, lane line recognition confidences at the time points Pⱼ and Pₖ do not need to be included in summation.
(5) The foregoing process is performed for all timestamps in the interval [S1, E1] in FIG. 3, and updated lane line recognition confidences at all the timestamps are obtained. In this case, calculation of updated lane line recognition confidences for the time interval [S1, E1] ends.
(6) After the updated lane line recognition confidences at the timestamps are obtained, confidences for different segments of a lane line may also be determined in space. For each timestamp, an updated lane line recognition confidence at the timestamp is the same as a lane line recognition confidence within a range of N to M meters ahead of a vehicle location in a traveling direction of the vehicle at a time point of the timestamp. It should be understood that space segments corresponding to different timestamps may or may not overlap.
(7) Based on (5) and (6), it should be understood that, because a timestamp is associated with a spatial location of the vehicle, at a time point of each timestamp, there is a determined spatial location (coordinate values) of the vehicle that corresponds to the time point of the timestamp. Therefore, in (5), the time interval [S1, E1] is segmented in time based on a timestamp, and an updated lane line recognition confidence corresponding to the timestamp is obtained; and in (6), a corresponding space interval [-N±S, L-M±S] is segmented in space based on a confidence interval corresponding to the timestamp, and an updated lane line recognition confidence corresponding to the space segment is obtained. The two updated lane line recognition confidences are substantially equivalent.

In the foregoing process, for each timestamp in the interval [S1, E1] determined based on the time point of the timestamp T, an updated lane line recognition confidence is calculated and obtained. With the foregoing process, reliability and accuracy of a lane line recognition confidence at each timestamp can be improved. A reason is as follows: In the conventional technology, for a timestamp, a value of only one lane line recognition confidence is corresponding to the timestamp, but accuracy of the lane line recognition confidence is greatly affected by an environment. For example, if a vehicle travels with strong light towards another vehicle at a time point of a timestamp and the strong light affects image obtaining of a front environment by a camera of the another vehicle, it is very likely that a result of a lane line recognition confidence at the time point of the timestamp fluctuates greatly and is inaccurate; or a lane line is blocked by another traffic participant (for example, a vehicle or a pedestrian) and cannot be recognized. In these cases, a value of a single lane line recognition confidence cannot "truly" reflect a recognition result. However, in the technical solution in this embodiment of this application, for any timestamp, an updated lane line recognition confidence at the timestamp is determined by performing summation on lane line recognition confidences at all timestamps whose lane line recognition ranges include the timestamp (which may be denoted/understood as a timestamp set "corresponding to" the timestamp), so that a lane line recognition confidence error caused by recognition fluctuation at a single timestamp is maximally eliminated or suppressed. That is, for a timestamp (or a lane line recognition confidence interval corresponding to the timestamp), an updated lane line recognition confidence generally reflects confidences at all possible timestamps whose lane line recognition lengths (or second time intervals corresponding to the lane line recognition lengths) include the lane line recognition confidence interval. Therefore, inaccuracy of a lane line recognition confidence that is caused by recognition fluctuation can be suppressed or eliminated in the technical solution of this embodiment, and reliability and accuracy of a lane line recognition confidence are improved.

In some other embodiments, appropriate changes may be made to the foregoing technical process without departing from the spirit of this application. For example, for a timestamp (or a lane line recognition confidence interval corresponding to the timestamp), an updated lane line recognition confidence may be obtained by performing summation on lane line recognition confidences at two, three, or more timestamps whose lane line recognition length ranges include the timestamp. The two, three, or more timestamps whose recognition ranges include the timestamp may be specifically selected based on a situation. For example, lane line recognition confidences at two, three, or more timestamps whose recognition ranges include the timestamp and that are closest to the timestamp may be selected for summation to obtain the updated lane line recognition confidence at the timestamp. Alternatively, two, three, or more timestamps with largest recognition ranges may be selected from timestamps whose recognition ranges include the timestamp to determine the updated lane line recognition confidence at the timestamp. A person skilled in the art may perform selection according to an actual requirement without departing from the spirit of this application.

For example, FIG. 4 summarizes the foregoing technical procedure 400. The procedure 400 specifically includes the following steps.
401: Obtain a maximum lane line recognition length at a time point T and a first time interval corresponding to the maximum lane line recognition length.
402: Traverse each timestamp in the first time interval to obtain a lane recognition length corresponding to each timestamp.
403: For each timestamp, determine whether a lane line recognition length corresponding to the timestamp is greater than M. If a determining result is no, return to 402 to continue to obtain a next timestamp and a lane line recognition length corresponding to the timestamp; or if a determining result is yes, proceed to 404.
404: Obtain a second time interval corresponding to the lane line recognition length.
405: For each timestamp in the first time interval, perform summation on lane line recognition confidences at a plurality of timestamps whose lane line recognition lengths (or second time intervals corresponding to the lane line recognition lengths) include the timestamp, to obtain an updated lane line recognition confidence.

In some other embodiments, the foregoing technical process may be extended to a real-time scenario, namely, a scenario in which a vehicle is traveling. In this case, for example, lane line recognition confidences at a plurality of (which may be two, three, or more) preceding timestamps of a current timestamp (timestamps before the current timestamp in time) whose lane line recognition ranges include the current timestamp may be selected to perform summation to obtain an updated lane line recognition confidence at the current timestamp, so that reliability and accuracy of the lane line recognition confidence can be improved in real time.

S3: Construct a lane line true value.

After S2 is completed, S3, that is, a step of constructing a lane line true value, may be performed. An objective of this step is to construct a lane line true value based on the updated lane line recognition confidence obtained in S2.

Still using the timestamp T as an example, a first time interval [S1, E1] at the timestamp T and updated lane line recognition confidences at all timestamps {p₁, p₂, , ...p*ₙ*} in the first time interval are obtained in S2.

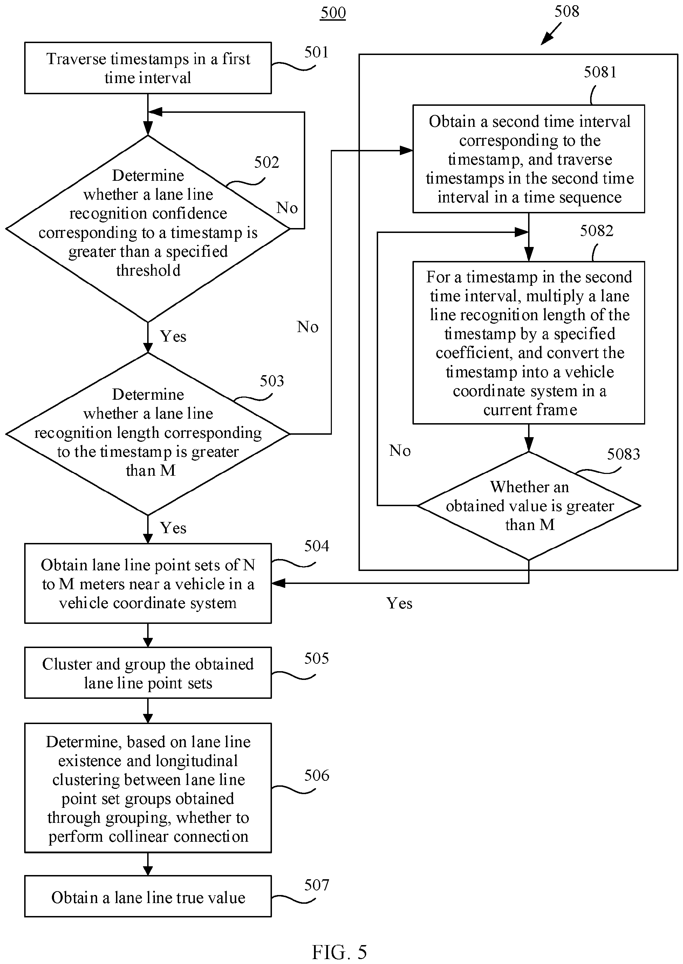

For example, FIG. 5 shows a procedure 500 of constructing a lane line true value. The procedure 500 includes the following steps.

501: First, obtain a first time interval and timestamps in the first time interval, and traverse the timestamps in the first time interval.

502: For each timestamp, determine whether a lane line recognition confidence corresponding to the timestamp is greater than a specified threshold. If the lane line recognition confidence is greater than the specified threshold, proceed to a next step 503; otherwise, return to the previous step to obtain a next timestamp. In some embodiments, the threshold may be set to 0.6. It should be understood that a person skilled in the art may set a value of the threshold according to an actual requirement without departing from the spirit of this application.

503: Determine whether a lane line recognition length corresponding to the timestamp is greater than M. If the lane line recognition length is less than M, proceed to an offline lane line tracking procedure 508 (shown in a dashed box in FIG. 5); or if the lane line recognition length is greater than M, proceed to step 504.

As described above, if it is determined in 503 that a lane line recognition length at a timestamp (for example, Pᵢ) is less than the specified threshold M, the procedure proceeds to the offline lane line tracking procedure 508 shown on a right side of FIG. 5. The procedure 508 includes the following steps.

5081: First, obtain a second time interval corresponding to Pᵢ, and then traverse, in a time sequence, other timestamps in the second time interval that are different from the current timestamp Pᵢ.

5082: For each of the other timestamps traversed, multiply a lane line recognition length corresponding to the timestamp by a specified coefficient. A reason why the specified coefficient is set herein is as follows: In this step, a lane line recognition length (result) at another timestamp is used to replace a lane line recognition length at the time point Pᵢ. After the lane line recognition length at the another timestamp is converted into a lane line recognition length at the timestamp Pᵢ, a confidence loss occurs. Therefore, the specified coefficient is used herein to represent the loss. The specified coefficient may be a value ranging from 0.4 to 0.6.

5083: Determine whether a value obtained in step 5082 is greater than M. If the value is greater than M, proceed to step 504; otherwise, return to the previous step to continue to traverse a next timestamp.

504: Obtain lane line point sets within a range of N to M meters away from a vehicle at the time point of the timestamp, and map and convert the lane line point sets at the time point of the timestamp to a vehicle coordinate system at a time point T based on a location and an orientation of an inertial navigation apparatus.

505: Cluster and group the obtained lane line point sets. A well-known clustering method may be used to cluster and group the lane line point sets. For example, a DBSCAB (Density-Based Spatial Clustering of Application with Noise) method may be used. It should be understood that any other suitable clustering method may also be used.

506: After the grouping is completed, determine, based on lane line existence and longitudinal clustering between lane line point set groups obtained through grouping, whether to perform collinear connection. This step specifically includes: obtaining grouped lane line point set results, and if a longitudinal distance or interval between lane lines in groups is greater than a specified threshold Q (Q may be any value from 20 to 30 meters), determining whether to perform collinear connection. The determining whether to perform collinear connection includes two steps. Step 1: Vectorize lane lines on two sides of the interval, and determine an included angle or a lateral spacing between two vectors. If the included angle exceeds a specified threshold (for example, 30°), or if the lateral spacing is greater than a specified threshold (for example, 3 meters), determine that collinear connection does not need to be performed; or if it is determined that both the included angle and the lateral spacing between the two vectors are less than the specified thresholds, proceed to step 2. Step 2: Consider a lane line recognition confidence at a timestamp within an interval range. If lane line recognition confidences at most timestamps within the interval range are less than a specified threshold (for example, 0.6), still skip performing collinear connection; or when lane line recognition confidences at most timestamps within the interval range are greater than the specified threshold, perform collinear connection.

507: Perform polynomial fitting on a lane line obtained in 506, to obtain a lane line true value at the time point of the timestamp T.

For other timestamps, lane line true values may be obtained by using a solution consistent with the foregoing solution.

S4: Extract a lane line recognition abnormal event.

After the lane line true value is obtained in S3, the lane line true value may be used to check a lane line recognition result. Comparison objects include the lane line true value obtained in S3 and a lane line recognition result obtained by the vehicle. The lane line recognition result may be obtained by a cloud-based lane line recognition algorithm based on image information obtained by the vehicle. Evaluation may be performed based on a preset indicator. The preset indicator may include: (1) The lane line recognition result is excessively short; (2) a lateral error of the lane line recognition result is excessively large; (3) an orientation error of the lane line recognition result is excessively large; or (4) missed detection exists in the lane line recognition result.

In some embodiments, a lane line may be fitted by using a polynomial. Specifically, the lane line recognition result and the lane line true value may be separately fitted by using a cubic polynomial. A lane line recognition result obtained through fitting is as follows: *y* = *c*(*x*) = *c*₀ + *c*₁*x* + *c*₂*x*² + *c*₃*x*³. A lane line true value obtained through fitting is as follows: = *m*(*x*) = *m*₀ + *m*₁*x* + *mx*² + *m*₃*x*³.

For each frame T, a length of a lane line true value is defined as Yₘ, a lane line recognition length is defined as Y_{c} (meters), and a truncation point is defined as *x*₁, *x*₂, , ...*xₙ*. The truncation point is a point preset on a lane line recognition result track, for example, a point that is 10 meters, 20 meters, or 30 meters away from an origin. A person skilled in the art may specifically select an appropriate truncation point based on an actual situation.

In some embodiments, based on the foregoing descriptions, an evaluation process and a meaning of the preset indicator are as follows.
(1) If Y_{c} or Yₘ is less than a specified threshold, it is considered that the lane line recognition result is excessively short. In some embodiments, the specified threshold herein may be 0.5. It should be understood that a person skilled in the art may select an appropriate threshold based on an actual situation without departing from the spirit of this application.
(2) Ay value of a polynomial at each truncation point *x*₁, *x*₂, , ...*xₙ* is calculated. If a y-direction error (namely, |*c*(*xᵢ*) - *m*(*xᵢ*)|) at any truncation point is greater than a specified threshold, it is considered that the lateral error of the lane line recognition result is excessively large. In some embodiments, the specified threshold herein may be 1 meter. It should be understood that a person skilled in the art may select an appropriate threshold based on an actual situation without departing from the spirit of this application.
(3) A y value of a polynomial at each truncation point is calculated. For each truncation point, a vector (namely, *̅a̅*̅ = (*xᵢ*,*c*(*xᵢ*) - *c*₀),*̅b̅*̅ = (*xᵢ*,ₘ(*xᵢ*) - *m*₀)) whose start point is a start point of a lane line and whose end point is the truncation point is constructed. An included angle between two vectors is determined. If an included angle between vectors of any group is greater than a specified threshold, the orientation error of the lane line recognition result is excessively large. In some embodiments, the specified threshold herein may be 30°. It should be understood that a person skilled in the art may select an appropriate threshold based on an actual situation without departing from the spirit of this application.
(4) Missed detection exists in the lane line recognition result: The lane line true value Yₘ exists, but no lane line recognition result Yₘ is output.

In the foregoing several cases, a lane line recognition anomaly may be determined by comparing the lane line recognition result with the lane line true value obtained by using posteriori data in this embodiment of this application. However, the recognition anomaly cannot be obtained by using an existing lane line recognition algorithm. Further, the recognition anomaly may be fed back to the lane line recognition algorithm (a neural deep learning algorithm is usually used) as a training material, to improve a training material of the lane line recognition algorithm, and improve recognition accuracy of the lane line recognition algorithm.

S5: Upload the recognized abnormal event to a cloud.

In some embodiments, a lane line recognition algorithm may be provided on a server side, and lane line recognition anomaly data may be transmitted to the lane line recognition algorithm on the server side, to improve recognition accuracy of the algorithm. In some embodiments, the server side may be a cloud. In some embodiments, the server side may be alternatively a server. A trained lane line recognition algorithm on the cloud can also provide a more accurate and reliable lane line recognition capability for the vehicle side through a communications network. In this way, a benign cycle from data to a training material to improvement of algorithm performance can be formed.

S6: End.

Some embodiments further provide a lane line recognition apparatus. Referring to FIG. 6, the lane line recognition apparatus includes a lane line recognition module, an inertial navigation module, and a computing apparatus that are disposed on a vehicle side. The computing apparatus is communicatively connected to the lane line recognition module and the inertial navigation module, and is configured to perform the solutions in the embodiments of S0 to S6.

Some embodiments further provide a lane line recognition system. Still referring to FIG. 6, the system includes a lane line recognition apparatus disposed on a vehicle side and a lane line recognition algorithm module disposed on a server side. The lane line recognition apparatus includes a lane line recognition module, an inertial navigation module, and a computing apparatus. The lane line recognition apparatus is communicatively connected to the lane line recognition algorithm module. The lane line recognition apparatus is configured to send a lane line recognition abnormal event to the lane line recognition algorithm module. The lane line recognition algorithm module is configured to train the lane line recognition algorithm by using the lane line recognition abnormal event, to improve recognition accuracy of the lane line recognition algorithm. In some embodiments, the server side may be a cloud. In some embodiments, the server side may be alternatively a server.

Some embodiments further provide a computer-readable storage medium. Referring to FIG. 7, the computer-readable storage medium 71 includes an instruction set 73. The instruction set 73 may be executed by a processor to implement the implementation solutions of S0 to S6.

Some embodiments further provide a lane line recognition system. Referring to FIG. 7, the lane line recognition system includes a processor 72 and a computer-readable storage medium 71. The computer-readable storage medium stores an instruction set 73. The instruction set 73 may be executed by a processor to implement the implementation solutions of S0 to S6.

The embodiments of this application provide a vehicle drivable area detection method and system, and a self-driving vehicle using the system. In the technical solutions of this application, a plurality of sensors are used, and obstacle probability information obtained based on the plurality of sensors is integrated to obtain a probability grid map, so that a drivable area around a vehicle can be more accurately recognized. In addition, in this application, obstacle parallax information, an obstacle map, and other manners are used, so that the technical solutions of this application can be highly generalized, and are widely applicable to a plurality of scenarios, without depending on training data. Therefore, the technical solutions of this application are robust. To sum up, the technical solutions of this application are widely applicable to self-driving solutions, systems, and vehicles at different levels.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical service division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, service units in the embodiments of this application may be integrated into one processing unit, or each of the units may exist alone physically, or two or more units are integrated into one unit. The integrated unit may be implemented in a form of hardware, or may be implemented in a form of a software service unit.

When the service unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

A person skilled in the art should be aware that in the foregoing one or more examples, the services described in this application may be implemented by hardware, software, firmware, or any combination thereof. When the present invention is implemented by software, the services may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

In the foregoing specific implementations, the objectives, technical solutions, and the benefits of this application are further described in detail. It should be understood that the foregoing descriptions are merely specific implementations of this application.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A method for determining a lane line recognition abnormal event, comprising:
determining an updated lane line recognition confidence based on at least a posteriori lane line recognition result;
constructing a lane line true value based on at least the updated lane line recognition confidence; and
determining a lane line recognition abnormal event based on the lane line recognition result and the lane line true value, wherein
the posteriori lane line recognition result comprises a lane line recognition confidence obtained after a vehicle completes traveling.

2. The method for determining a lane line recognition abnormal event according to claim 1, wherein
the determining an updated lane line recognition confidence based on at least a posteriori lane line recognition result comprises: aligning the posteriori lane line recognition result and posteriori inertial navigation data based on a timestamp, wherein the posteriori inertial navigation data comprises inertial navigation data obtained after the vehicle completes traveling.

3. The method for determining a lane line recognition abnormal event according to claim 2, wherein
the timestamp has a lane line recognition result corresponding to the timestamp, and the lane line recognition result comprises a vehicle location, a lane line recognition confidence, and a lane line recognition length.

4. The method for determining a lane line recognition abnormal event according to claim 3, wherein
the determining an updated lane line recognition confidence based on at least a posteriori lane line recognition result comprises: determining, for any timestamp, based on at least two lane line recognition confidences in the posteriori lane line recognition result corresponding to the any timestamp, an updated lane line recognition confidence corresponding to the any timestamp.

5. The method for determining a lane line recognition abnormal event according to claim 4, wherein
the determining, based on two lane line recognition confidences in the posteriori lane line recognition result corresponding to the any timestamp, an updated lane line recognition confidence corresponding to the any timestamp comprises:
for any timestamp, determining a timestamp set corresponding to the any timestamp, wherein the timestamp set comprises one or more timestamps, and a lane line recognition length of the one or more timestamps comprises a vehicle location corresponding to the any timestamp; obtaining a lane line recognition confidence corresponding to each timestamp in the timestamp set, and forming a lane line recognition confidence set; and obtaining at least two lane line recognition confidences from the lane line recognition confidence set, and performing summation to obtain the updated lane line recognition confidence corresponding to the any timestamp.

6. The method for determining a lane line recognition abnormal event according to claim 5, wherein
the obtaining at least two lane line recognition confidences from the lane line recognition confidence set, and performing summation to obtain the updated lane line recognition confidence corresponding to the any timestamp comprises:
performing summation on all lane line recognition confidences in the lane line recognition confidence set to obtain the updated lane line recognition confidence corresponding to the any timestamp.

7. The method for determining a lane line recognition abnormal event according to claim 6, wherein
the summation comprises at least one of direct summation and weighted summation.

8. The method for determining a lane line recognition abnormal event according to any one of claims 3 to 7, wherein
the constructing a lane line true value based on at least the updated lane line recognition confidence comprises:
determining whether the updated lane line recognition confidence is greater than a first threshold and whether the lane line recognition length is greater than a second threshold, and obtaining a first timestamp set, wherein a lane line recognition confidence corresponding to each timestamp in the first timestamp set is greater than the first threshold, and a lane line recognition length corresponding to each timestamp in the first timestamp set is greater than the first threshold; and
obtaining, for each timestamp in the first timestamp set, a first lane line point set of N to M meters near the vehicle in a vehicle coordinate system.

9. The method for determining a lane recognition abnormal event according to claim 8, further comprising:
obtaining a second timestamp set whose updated lane line recognition confidence is greater than the first threshold and whose lane line recognition length is less than the second threshold;
replacing each timestamp in the second timestamp set with another timestamp that meets a specified condition, wherein a lane line recognition length corresponding to the another timestamp is greater than the first threshold; and
for each timestamp in a second timestamp set obtained after the replacement, obtaining a second lane line point set of N to M meters near the vehicle in the vehicle coordinate system.

10. The method for determining a lane line recognition abnormal event according to claim 9, further comprising:
clustering and grouping the first lane line point set and the second lane line point set, and if a longitudinal distance between lane line point set groups obtained after grouping is greater than a distance threshold, determining, based on a lane line existence determining result, whether to perform collinear connection.

11. The method for determining a lane line recognition abnormal event according to claim 10, further comprising:
perform polynomial fitting on lane line point sets obtained after the collinear connection, to obtain a lane line true value.

12. The method for determining a lane line recognition abnormal event according to any one of claims 8 to 11, wherein
the determining a lane line recognition abnormal event based on the lane line recognition result and the lane line true value comprises:
comparing the lane line true value with the lane line recognition result to determine an abnormal event, wherein the abnormal event comprises: the lane line recognition result is excessively short, a lateral error of the lane line recognition result is excessively large, an orientation error of the lane line recognition result is excessively large, or missed detection exists in the lane line recognition result.

13. The method according to claim 12, further comprising:
uploading the abnormal event to a server side, wherein the abnormal event is used to train a lane line recognition algorithm of the server side.

14. A lane line recognition apparatus, comprising:
a lane line recognition module disposed on a vehicle side;
an inertial navigation module disposed on the vehicle side; and
a computing apparatus disposed on the vehicle side and communicatively connected to the lane line recognition module and the inertial navigation module, wherein
the computing apparatus is configured to perform the method according to any one of claims 1 to 13.

15. A lane line recognition system, comprising:
the lane line recognition apparatus according to claim 14; and
a lane line recognition algorithm module disposed on a server side, wherein the lane line algorithm recognition module comprises a lane line recognition algorithm;
the lane line recognition apparatus is communicatively connected to the lane line recognition algorithm module, the lane line recognition apparatus is configured to send the abnormal event to the lane line recognition algorithm module, and the lane line recognition algorithm module is configured to train the lane line recognition algorithm by using the abnormal event.

16. A computer-readable storage medium, comprising an instruction set, wherein the instruction set may be executed by a processor to implement the method according to any one of claims 1 to 13.
